# EUROPEAN PATENT APPLICATION

(11) **EP 3 015 987 A1**
(43) Date of publication of application: **04.05.2016**
(21) Application number: 14817688.6
(22) Date of filing: 20.02.2014
(51) Int. Cl.: G06F 11/14, G06F 9/445

(54) **SYSTEM UPDATE METHOD, APPARATUS, AND DEVICE**

(30) Priority: 25.06.2013 CN 201310256345
(71) Applicant: Xiaomi Inc., Beijing 100085 (CN)
(72) Inventor: RU, Yi, Beijing 100085 (CN); YANG, Xiaohe, Beijing 100085 (CN)
(74) Representative: Robson, Aidan John
(86) International application number: PCT/CN2014/072319
(87) International publication number: WO 2014/206100

(57) **Abstract**

Disclosed are a system update method, apparatus, and device, which belong to the field of information technologies. The method comprises: determining a currently used system, and synchronizing a system file of the currently used system to a corresponding mirror system; acquiring a system update package, and updating, according to the system update package, the mirror system after synchronization; and after the mirror system after synchronization has been successfully updated, starting the updated mirror system, and using the updated mirror system as the currently used system. In the disclosure, system update is performed in a mirror system, after the mirror system has been successfully updated, the updated mirror system is started, and the updated mirror system is used as a currently used system, so that system update does not influence normal use of the currently used system, and a case in which the currently used system cannot be normally used because of an exception that occurs in a process of system update is also prevented, thereby enhancing system safety and stability.

## Description

### CROSS REFERENCE TO RELATED APPLICATION

The present application is based upon and claims priority to Chinese Patent Application No. 201310256345.9 filed on June 25, 2013, the entire contents of which are incorporated herein by reference.

### TECHNICAL FIELD

The present disclosure relates to the field of information technology, and particularly, to a method, a device and an apparatus for upgrading a system.

### BACKGROUND

As hardware structures of smart electronic terminal products become more and more similar, core values and technologies of various kinds of smart electronic terminal products are reflected in functions of systems of the smart electronic terminal products, and the smart electronic terminal products equipped with systems having high maturity and perfect functions have relatively high competitiveness in market competition. In order to guarantee stability of the systems and perfectness of the functions, currently used systems are required to be upgraded frequently. Thus, how to safely and quickly upgrade a currently used system is the key to guarantee safety and stability of the system.

Currently, when a currently used system is upgraded, a corresponding system upgrade package is downloaded via a network, then the currently used system is restarted after the download is completed, the downloaded system upgrade package is operated to upgrade the currently used system, the currently used system is restarted after the upgrade is completed, and at this time, the currently used system is the upgraded system.

For an upgrade scheme of the above system, since the currently used system is upgraded, if accidents such as system poweroff or an abnormal system upgrade have occurred in the upgrade of the system, it will result in that the currently used system can not be normally used, thereby decreasing safety and stability of the system. In addition, when the entire process for upgrading the system is performed after the system is restarted, the system can not be used while the system is being upgraded.

### SUMMARY

In order to solve the problems in the Background, embodiments of the present disclosure provide a method, a device and an apparatus for upgrading a system.

According to a first aspect of the embodiments of the present disclosure, a method for upgrading a system is provided, and the method includes:
determining a currently used system, and synchronizing system files of the currently used system to a corresponding mirror system;
obtaining a system upgrade package, and upgrading the synchronized mirror system according to the system upgrade package; and
starting the upgraded mirror system after the synchronized mirror system is successfully upgraded, and using the upgraded mirror system as the currently used system.

In one embodiment, the system files of the currently used system include BOOT files and SYSTEM files; and
the synchronizing the system files of the currently used system to the corresponding mirror system includes: synchronizing the BOOT files of the currently used system to the corresponding mirror system, and synchronizing the SYSTEM files of the currently used system to the corresponding mirror system after the BOOT files are successfully synchronized.

In one embodiment, before the obtaining the system upgrade package, the method further includes: searching whether a corresponding system upgrade package is present in a network, and if the corresponding system upgrade package is present, displaying a prompt indicating that the system upgrade package is present to allow a user to confirm according to the prompt whether to perform system upgrade; and
the obtaining the system upgrade package includes: downloading the corresponding system upgrade package from the network after obtaining confirmation information indicating that the user determines to perform the system upgrade.

In one embodiment, before the starting the upgraded mirror system, the method further includes: setting and displaying a starting identifier to allow a user to confirm according to the starting identifier whether to start the upgraded mirror system; and
the starting the upgraded mirror system includes: performing an operation of starting the upgraded mirror system after obtaining the confirmation information indicating that the user determines to start the upgraded mirror system.

In one embodiment, after the using the upgraded mirror system as the currently used system, the method further includes: synchronizing system files of the upgraded mirror system to the previously used system.

According to a second aspect of the embodiments of the present disclosure, a device for upgrading a system is provided, and the device includes:
a determining module configured to determine a currently used system;
a first synchronizing module configured to synchronize system files of the currently used system determined by the determining module to a corresponding mirror system;
an obtaining module configured to obtain a system upgrade package;
an upgrading module configured to upgrade the synchronized mirror system according to the system upgrade package obtained by the obtaining module; and
a starting module configured to start the upgraded mirror system after the synchronized mirror system is successfully upgraded, and to use the upgraded mirror system as the currently used system.

In one embodiment, the system files of the currently used system include BOOT files and SYSTEM files; and
the first synchronizing module configured to synchronize the BOOT files of the currently used system to the corresponding mirror system, and to synchronize the SYSTEM files of the currently used system to the corresponding mirror system after the BOOT files are successfully synchronized.

In one embodiment, the device further includes:
a searching module configured to search whether a corresponding system upgrade package is present in a network;
a displaying module configured to display a prompt indicating that the system upgrade package is present when the searching module searches out that the corresponding system upgrade package is present, to allow a user to confirm according to the prompt whether to perform a system upgrade;
an obtaining module configured to download the corresponding system upgrade package from the network after to obtain confirmation information indicating that the user determines to perform the system upgrade.

In one embodiment, the device further includes:
a setting module configured to set and display a starting identifier to allow a user to confirm according to the starting identifier whether to start the upgraded mirror system;
a starting module configured to perform an operation of starting the upgraded mirror system after to obtain the confirmation information indicating that the user determines to start the upgraded mirror system.

In one embodiment, the device further includes: a second synchronizing module configured to synchronize system files of the upgraded mirror system to the previously used system.

According to a third aspect, an apparatus for upgrading a system is provided, and the apparatus includes:
one or more processors;
a storage; and
one or more modules stored in the storage and configured to be performed by the one or more processors, wherein the one or more modules have functions of:
   determining a currently used system, and synchronizing system files of the currently used system to a corresponding mirror system;
   obtaining a system upgrade package, and upgrading the synchronized mirror system according to the system upgrade package; and
   starting the upgraded mirror system after the synchronized mirror system is successfully upgraded, and using the upgraded mirror system as the currently used system.

The technical solutions provided by the embodiments of the present disclosure may include the following beneficial effects that: system files of a currently used system are synchronized to a corresponding mirror system, a system upgrade is performed in the synchronized mirror system, the upgraded mirror system is started after the mirror system is successfully upgraded, and the upgraded mirror system is used as the currently used system, such that the system upgrade does not influence normal use of the currently used system. Meanwhile, the upgrade is performed in the mirror system, which prevents from the case where accidents have occurred in the upgrade of the system that results in that the currently used system can not be normally used, and thus increases safety and stability of the system.

It should be understood that both the above general description and the following detailed description are only illustrative and explanatory, which do not limit the present invention.

### BRIEF DESCRIPTION OF THE DRAWINGS

The accompanying drawings, which hereby are incorporated in and constitute a part of this specification, illustrate embodiments that conform to the present invention, and together with the specification serve to explain the principles of the present invention.
FIG. 1 is a flowchart illustrating a method for upgrading a system according to an exemplary embodiment;
FIG. 2 is a flowchart illustrating a method for upgrading a system according to an exemplary embodiment;
FIG. 3 is a block diagram illustrating a first kind of device for upgrading a system according to an exemplary embodiment;
FIG. 4 is a block diagram illustrating a second kind of device for upgrading a system according to an exemplary embodiment.
FIG. 5 is a block diagram illustrating a third kind of device for upgrading a system according to an exemplary embodiment; and
FIG. 6 is a block diagram illustrating a fourth kind of device for upgrading a system according to an exemplary embodiment.

### DETAILED DESCRIPTION

In order to make purposes, technical solutions and advantages of the present disclosure more clear, hereinafter, the embodiments of the present disclosure will be further described in detail in conjunction with the drawings.

### Embodiment 1

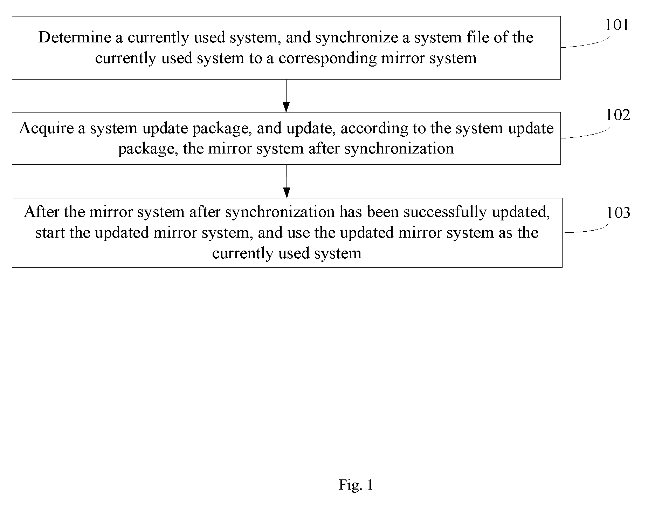

The present embodiment provides a method for upgrading a system, with reference to Fig.1, the flow of the method provided by the present embodiment may be shown as follows:
Step 101: determining a currently used system, and synchronizing system files of the currently used system to a corresponding mirror system;
   in one embodiment, the system files of the currently used system include BOOT files and SYSTEM files;
   the synchronizing the system files of the currently used system to the corresponding mirror system may include: synchronizing the BOOT files of the currently used system to the corresponding mirror system, and synchronizing the SYSTEM files of the currently used system to the corresponding mirror system after the BOOT files are successfully synchronized.
Step 102: obtaining a system upgrade package, and upgrading the synchronized mirror system according to the system upgrade package;
   in one embodiment, before obtaining the system upgrade package, the method may further include: searching whether a corresponding system upgrade package is present in the network, and displaying a prompt indicating that the system upgrade package is present if the corresponding system upgrade package is present, to allow a user to confirm according to the prompt whether to perform a system upgrade;
   the obtaining the system upgrade package includes: downloading the corresponding system upgrade package from the network after obtaining information indicating to perform the system upgrade determined by the user.
Step 103: starting the upgraded mirror system after the synchronized mirror system is successfully upgraded, and using the upgraded mirror system as the currently used system;

In one embodiment, before starting the upgraded mirror system, the method may further include: setting and displaying a starting identifier, to allow a user to confirm according to the starting identifier whether to start the upgraded mirror system;
the starting the upgraded mirror system includes: performing an operation of starting the upgraded mirror system after obtaining information indicating to start the upgraded mirror system determined by the user.

In one embodiment, after using the upgraded mirror system as the currently used system, the method may further include: synchronizing system files of the upgraded mirror system to the previously used system.

In the method provided by the present embodiment, system files of a currently used system are synchronized to a corresponding mirror system, a system upgrade is performed in the synchronized mirror system, the upgraded mirror system is started after the mirror system is successfully upgraded, and the upgraded mirror system is used as the currently used system, such that the system upgrade does not influence normal use of the currently used system. Meanwhile, the upgrade is performed in the mirror system, which prevents from the case where accidents have occurred in the upgrade of the system that results in that the currently used system can not be normally used, and thus increases safety and stability of the system.

In order to more clearly explain the method for upgrading a system provided by the above embodiment, by combining the contents of the above embodiment and taking the following Embodiment 2 as an example, a method for upgrading a system is explained in detail in the following Embodiment 2.

### Embodiment 2

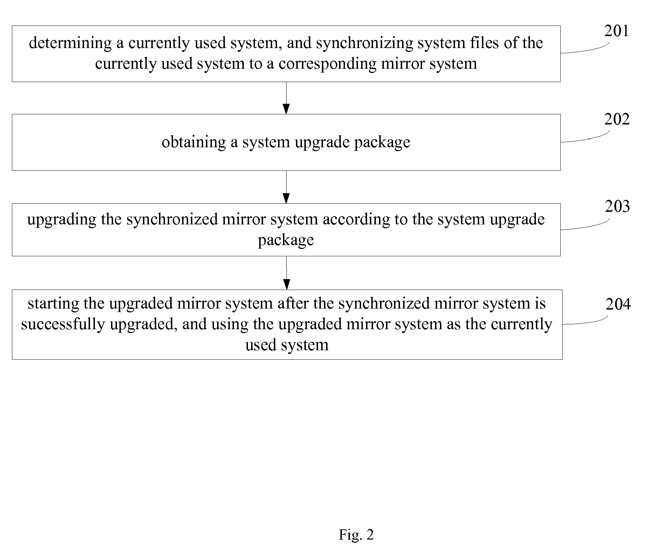

The present embodiment provides a method for upgrading a system, the systems to be upgraded in the present embodiment includes two synchronized systems, and any one of the two systems is currently used, the other system not used currently is a mirror system corresponding to the currently used system. With reference to Fig.2, the flow of the method provided by the present embodiment may be shown as follows:
Step 201: determining a currently used system, and synchronizing system files of the currently used system to a corresponding mirror system;

When this step is specifically performed, the present embodiment does not limit a specific time at which the step 201 is performed. For example, in order to guarantee synchronization between the currently used system and the corresponding mirror system, a synchronizing period may be preset, by which the step 201 is periodically performed. Wherein, the present embodiment does not limit a specific length of the preset synchronizing period, for example, the synchronizing period may be preset to be a week or a day. Besides, the step 201 may also be performed while it is determined that a system upgrade is required to be performed in accordance with the method for upgrading the system provided by the present embodiment.

In addition, the system files of the currently used system include BOOT files and SYSTEM files. Thus, when the step of synchronizing the system files of the currently used system to the corresponding mirror system is implemented, it is required to synchronize the BOOT files of the currently used system to the corresponding mirror system, and to synchronize the SYSTEM files of the currently used system to the corresponding mirror system after the BOOT files are successfully synchronized. If the process to synchronize the BOOT files of the currently used system to the corresponding mirror system fails, or the process to synchronize the SYSTEM files of the currently used system to the corresponding mirror system fails, the synchronizing process between the currently used system and the corresponding mirror system is determined to be failed. In order to successfully perform subsequent processes for upgrading the system, the method provided by the present embodiment may repeatedly perform the synchronizing process between the two systems till the synchronization is succeeded, and then subsequent upgrade steps continue to be performed. Besides, a specific method for implementing the step of synchronizing the system files of the currently used system to the corresponding mirror system may also be other methods. The present embodiment does not limit a specific method for implementing the step of synchronizing the system files of the currently used system to the corresponding mirror system.

Step 202: obtaining a system upgrade package;

With respect to this step, the present embodiment does not limit a specific method of obtaining an upgrade package. The method includes downloading a corresponding system upgrade package from a network, but it is not limited thereto.

In one embodiment, in order to make the method for upgrading a system provided by the present embodiment be more conforming to a user's actual needs, before obtaining the system upgrade package, it is searched whether a corresponding system upgrade package is present in the network, and a prompt indicating that the system upgrade package is present is displayed if the corresponding system upgrade package is present, to allow a user to confirm according to the prompt whether to perform the system upgrade; and the corresponding system upgrade package is downloaded from the network after information indicating to perform the system upgrade determined by the user is obtained.

The present embodiment does not limit a specific searching time at which it is searched whether a corresponding system upgrade package is present in the network. For example, a searching period may be set, such that it is periodically searched whether the corresponding system upgrade package is present in the network. Wherein, the set searching period can be any length, for example, the searching period may be set to be an hour or a day or the like. Furthermore, the present embodiment does not limit a specific searching method for searching whether a corresponding system upgrade package is present in the network. The method includes determining a version number of the currently used system, and searching whether a system upgrade package corresponding to the version number is present in the network according to the version number of the currently used system, but it is not limited thereto. The present embodiment does not limit a specific displaying method for displaying a prompt indicating that the system upgrade package is present. The method includes popping up a prompt window indicating that the system upgrade package is present, but it is not limited thereto. The present embodiment does not limit a specific determining method for obtaining information indicating that the user determines to perform a system upgrade. The method includes using obtained information indicating that a user clicks a specified button in the prompt window, which indicates that the system upgrade package is present, as information indicating that the user determines to perform the system upgrade, but it is not limited thereto.

It is to be explained that, since the present embodiment does not limit a specific searching time at which it is searched whether a corresponding system upgrade package is present in the network, if it is searched out that the corresponding system upgrade package is present in the network before the step 201, and the confirmation information indicating that the user determines to perform the system upgrade is obtained, the step 202 of downloading the corresponding system upgrade package form the network is performed directly in the currently used system, and then the step 201 is performed, at this time, the system upgrade package included in the synchronized mirror system is the system upgrade package that is synchronized from the currently used system. If it is searched out that the corresponding system upgrade package is present in the network after the step 201, and the confirmation information indicating that the user determines to perform the system upgrade is obtained, the step 202 is performed in the synchronized mirror system to download the corresponding system upgrade package form the network after the step 201 is performed, at this time, the system upgrade package included in the synchronized mirror system is the system upgrade package that is downloaded from the network. Thus, the present embodiment does not limit a specific sequence of performing the steps 201 and 202.

Step 203: upgrading the synchronized mirror system according to the system upgrade package;

With respect to this step, the present embodiment does not limit a specific upgrading method for upgrading the synchronized mirror system according to the system upgrade package. For example, the obtained system upgrade package is analyzed, and it is determined whether the analysis is normal according to a digital signature, and if the analysis is normal, files in the system upgrade package are updated to the synchronized mirror system in manner of patches in the synchronized mirror system.

Step 204: starting the upgraded mirror system after the synchronized mirror system is successfully upgraded, and using the upgraded mirror system as the currently used system.

With respect to this step, the present embodiment does not limit a specific time at which the upgraded mirror system is started. For example, after the synchronized mirror system is successfully upgraded, the upgraded mirror system may be started when the system is restarted. For another example, after the synchronized mirror system is successfully upgraded, a starting identifier may be set and displayed to allow a user to confirm according to the starting identifier whether to start the upgraded mirror system, and an operation of starting the upgraded mirror system is performed after information indicating that the user determines to start the upgraded mirror system is obtained. A specific method for setting the starting identifier includes setting a specific parameter that represents the starting identifier, but it is not limited there to. The parameter value is used as identifier that determines whether to start or not. For example, when the parameter value is 0, it is a non-starting identifier, and when the parameter value is 1, it is a starting identifier. Certainly, the starting identifier may also use other numerical numbers to represent non-starting or starting. The present embodiment does not limit specific numerical numbers by which the starting identifier represents non-starting or starting. The present embodiment does not limit a specific method for displaying the starting identifier. The method includes displaying the starting identifier in manner of popping up a prompt window of the starting identifier to allow a user to confirm whether to start the upgraded mirror system by clicking the prompt window, or displaying a button that represents the starting identifier to make the user determines whether to start the upgraded mirror system by clicking the button, but it is not limited thereto. After information indicating that the user clicks the prompt window or the button that represents the starting identifier is obtained, the obtained information indicating that the user clicks the prompt window or the button that represents the starting identifier may be used as the obtained information indicating that the user determines to start the upgraded mirror system. The present embodiment does not limit a specific obtaining method for obtaining information indicating that the user determines to start the upgraded mirror system.

In one embodiment, in order to maintain synchronization between a currently used system and a mirror system, after the upgraded mirror system is used as the currently used system, system files of the upgraded mirror system are synchronized to the previously used system. The present embodiment does not limit a specific synchronizing method for synchronizing the system files of the upgraded mirror system to the previously used system. For example, BOOT files and SYSTEM files of the upgraded mirror system may be synchronized to the previously used system in accordance with the specific synchronizing method in the step 201, the details of which can be found in the step 201, so verbosity is omitted here.

In the method provided by the present embodiment, system files of a currently used system are synchronized to a corresponding mirror system, a system upgrade is performed in the synchronized mirror system, the upgraded mirror system is started after the mirror system is successfully upgraded, and the upgraded mirror system is used as the currently used system, such that the system upgrade does not influence normal use of the currently used system. Meanwhile, the upgrade is performed in the mirror system, which prevents from the case where accidents have occurred in the upgrade of the system that results in that the currently used system can not be normally used, and thus increases safety and stability of the system.

### Embodiment 3

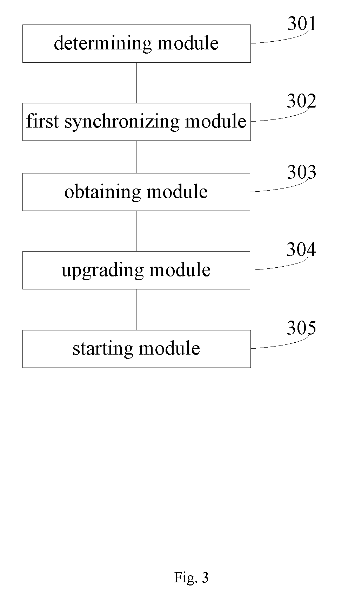

The present embodiment provides a device for upgrading a system, and the device is configured to perform the methods for upgrading the system provided by Embodiments 1 or 2. With reference to Fig.3, the device may include:
a determining module 301 configured to determine a currently used system;
a first synchronizing module 302 configured to synchronize system files of the currently used system determined by the determining system 301 to a corresponding mirror system;
an obtaining module 303 configured to obtain a system upgrade package;
an upgrading module 304 configured to upgrade the synchronized mirror system according to the system upgrade package obtained by the obtaining module 303;
a starting module 305 configured to start the upgraded mirror system after the synchronized mirror system is successfully upgraded, and to use the upgraded mirror system as the currently used system.

In one embodiment, the system files of the currently used system include BOOT files and SYSTEM files; and
the first synchronizing module 302 is configured to synchronize the BOOT files of the currently used system to the corresponding mirror system, and to synchronize the SYSTEM files of the currently used system to the corresponding mirror system after the BOOT files are successfully synchronized.

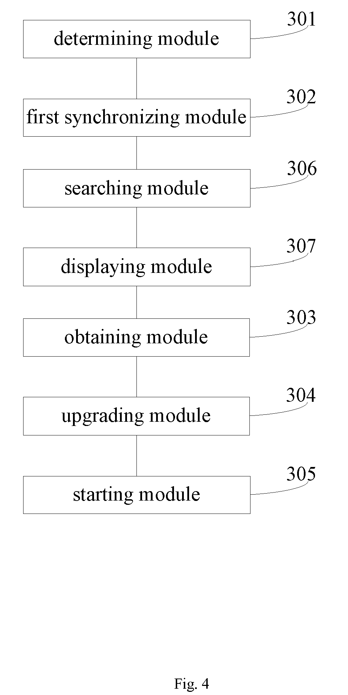

With reference to Fig.4, the device may further include:
a searching module 306 configured to search whether a corresponding system upgrade package is present in the network;
a displaying module 307 configured to display a prompt indicating that the system upgrade package is present when the searching module 306 searches out that the corresponding system upgrade package is present to allow a user to confirm according to the prompt whether to perform a system upgrade;
wherein the obtaining module 303 is configured to download the corresponding system upgrade package from the network after obtaining information indicating that the user determines to perform the system upgrade.

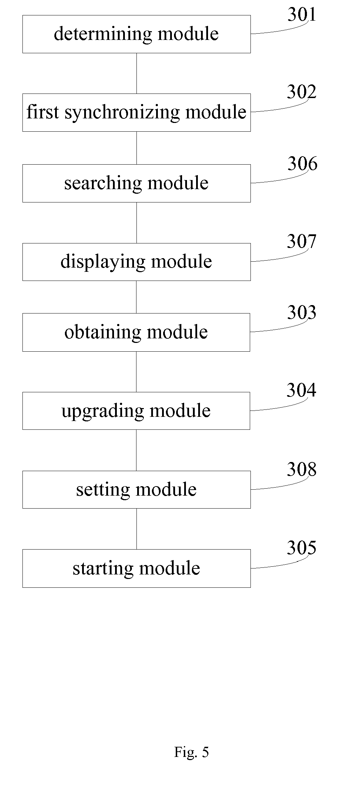

With reference to Fig.5, the device may further include: a setting module 308 configured to set and display a starting identifier to allow a user to confirm according to the starting identifier whether to start the upgraded mirror system;

wherein the starting module 305 is configured to perform an operation of starting the upgraded mirror system after obtaining information indicating that the user determines to start the upgraded mirror system.

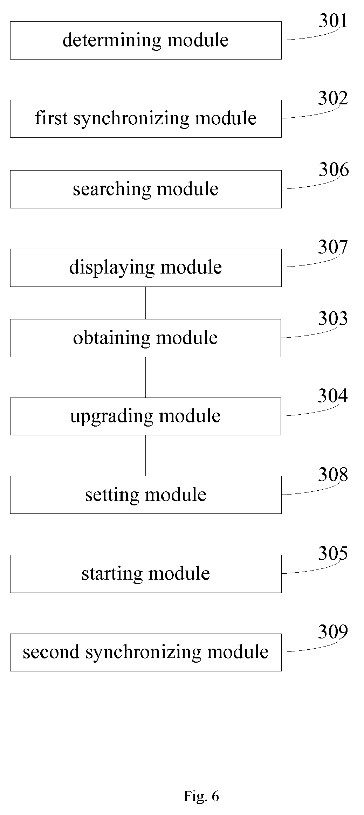

With reference to Fig.6, the device may further include: a second synchronizing module 309 configured to synchronize system files of the upgraded mirror system to the previously used system.

In the device provided by the present embodiment, system files of a currently used system are synchronized to a corresponding mirror system, a system upgrade is performed in the synchronized mirror system, the upgraded mirror system is started after the mirror system is successfully upgraded, and the upgraded mirror system is used as the currently used system, such that the system upgrade does not influence normal use of the currently used system. Meanwhile, the upgrade is performed in the mirror system, which prevents from the case where accidents have occurred in the upgrade of the system that results in that the currently used system can not be normally used, and thus increases safety and stability of the system.

### Embodiment 4

The embodiments of the present disclosure provide an apparatus for upgrading a system, and the apparatus for upgrading the system in the embodiments of the present disclosure may include one or more components: processors that are used for executing computer program instructions to carry out various kinds of flows and methods, random access memory (RAM) and Read Only Memory (ROM) for storing information and program instructions, storages for storing data and information, databases for storing sheets, catalogues or other data structures, I/O devices, interfaces, antennas or the like.

In the embodiments of the present disclosure, the computer program instructions are stored in the storages in form of one or more modules, and are configured to be executed by the processors, the above one or more modules have functions of:
determining a currently used system, and synchronizing system files of the currently used system to a corresponding mirror system;
obtaining a system upgrade package, and upgrading the synchronized mirror system according to the system upgrade package;
starting the upgraded mirror system after the synchronized mirror system is successfully upgraded, and using the upgraded mirror system as the currently used system.

Examples of the embodiments having the above functions have been described in detail in the method embodiments, so verbosity is omitted here.

In the apparatus provided by the present embodiment, system files of a currently used system are synchronized to a corresponding mirror system, a system upgrade is performed in the synchronized mirror system, the upgraded mirror system is started after the mirror system is successfully upgraded, and the upgraded mirror system is used as the currently used system, such that the system upgrade does not influence normal use of the currently used system. Meanwhile, the upgrade is performed in the mirror system, which prevents from the case where accidents have occurred in the upgrade of the system that results in that the currently used system can not be normally used is prevent, and thus increases safety and stability of the system.

It is to be explained that when the device and the apparatus for upgrading the system provided by the above embodiments realize the system upgrade, the division of the above function modules are described only for illustration, and in actual applications, the above function allocation may be implemented by different function modules as needed. That is, the internal structure of the apparatus is divided into different function modules, to realize all or a part of the above-described functions. In addition, the device and the apparatus for upgrading the system and the method for upgrading the system provided by the above embodiments belong to the same inventive concept, and their specific implementing processes may be found in the embodiments of the method, so verbosity is omitted here.

The numbers of the above embodiments of the present disclosure are only for description, not represent the sain ehe of the embodiments.

Those skilled in the art could understand, the whole or a part of the steps in the above embodiments may be achieved by hardware, or may be achieved by a program instructing the relevant hardware. The program may be stored in a computer readable storage medium, and the storage medium may be a read only memery, a magnetic disk or an optical disk, etc.

The above contents are only the embodiments of the present invention, which are not used to limit the present invention. Any changes, equal substitution and modifications, etc., within the spirit and principle of the present invention should be included in the protection scope of the present invention.

## Claims

1. A method for upgrading a system, **characterized in that** the method comprises:
determining a currently used system, and synchronizing system files of the currently used system to a corresponding mirror system;
obtaining a system upgrade package, and upgrading the synchronized mirror system according to the system upgrade package; and
starting the upgraded mirror system after the synchronized mirror system is successfully upgraded, and using the upgraded mirror system as the currently used system.

2. The method according to claim 1, **characterized in that** the system files of the currently used system comprise BOOT files and SYSTEM files; and
the synchronizing the system files of the currently used system to the corresponding mirror system comprises:
synchronizing the BOOT files of the currently used system to the corresponding mirror system, and synchronizing the SYSTEM files of the currently used system to the corresponding mirror system after the BOOT files are successfully synchronized.

3. The method according to claim 1, **characterized in that** before the obtaining the system upgrade package, the method further comprises:
searching whether a corresponding system upgrade package is present in a network, and if the corresponding system upgrade package is present, displaying a prompt indicating that the system upgrade package is present to allow a user to confirm whether to perform a system upgrade according to the prompt; and
the obtaining the system upgrade package comprises:
downloading the corresponding system upgrade package from the network after obtaining confirmation information indicating that the user determines to perform the system upgrade.

4. The method according to claim 1, **characterized in that** before the starting the upgraded mirror system, the method further comprises:
setting and displaying a starting identifier to allow a user to confirm according to the starting identifier whether to start the upgraded mirror system; and
the starting the upgraded mirror system comprises:
performing an operation of starting the upgraded mirror system after obtaining the confirmation information indicating that the user determines to start the upgraded mirror system.

5. The method according to any one of claims 1-4, **characterized in that** after the using the upgraded mirror system as the currently used system, the method further comprises:
synchronizing system files of the upgraded mirror system to the previously used system.

6. A device for upgrading a system, **characterized in that** the device comprises:
a determining module configured to determine a currently used system;
a first synchronizing module configured to synchronize system files of the currently used system determined by the determining module to a corresponding mirror system;
an obtaining module configured to obtain a system upgrade package;
an upgrading module configured to upgrade the synchronized mirror system according to the system upgrade package obtained by the obtaining module; and
a starting module configured to start the upgraded mirror system after the synchronized mirror system is successfully upgraded, and to use the upgraded mirror system as the currently used system.

7. The device according to claim 6, **characterized in that** the system files of the currently used system comprise BOOT files and SYSTEM files; and
the first synchronizing module configured to synchronize the BOOT files of the currently used system to the corresponding mirror system, and to synchronize the SYSTEM files of the currently used system to the corresponding mirror system after the BOOT files are successfully synchronized.

8. The device according to claim 6, **characterized in that** the device further comprises:
a searching module configured to search whether a corresponding system upgrade package is present in a network;
a displaying module configured to display a prompt indicating that the system upgrade package is present when the searching module searches out that the corresponding system upgrade package is present, to allow a user to confirm according to the prompt whether to perform a system upgrade; and
the obtaining module configured to download the corresponding system upgrade package from the network after to obtain confirmation information indicating that the user determines to perform the system upgrade.

9. The device according to claim 6, **characterized in that** the device further comprises:
a setting module configured to set and display a starting identifier to allow a user to confirm according to the starting identifier whether to start the upgraded mirror system; and
the starting module configured to perform an operation of starting the upgraded mirror system after to obtain the confirmation information indicating that the user determines to start the upgraded mirror system.

10. The device according to any one of claims 6 to 9, **characterized in that** the device further comprises:
a second synchronizing module configured to synchronize system files of the upgraded mirror system to the previously used system.

11. An apparatus for upgrading a system, **characterized in that** the apparatus comprises:
one or more processors;
a storage; and
one or more modules stored in the storage and configured to be performed by the one or more processors, wherein the one or more modules have functions of:
determining a currently used system, and synchronize system files of the currently used system to a corresponding mirror system;
obtaining a system upgrade package, and upgrade the synchronized mirror system according to the system upgrade package; and
starting the upgraded mirror system after the synchronized mirror system is successfully upgraded, and to use the upgraded mirror system as the currently used system.
